# DEMANDE DE BREVET EUROPEEN

(11) **EP 0 557 886 A2**
(43) Date de publication de la demande: **01.09.1993**
(21) Numéro de dépôt: 93102524.1
(22) Date de dépôt: 18.02.1993
(51) Int. Cl.: G06K 7/10, G06K 7/14, G06K 19/06

(54) **Appareil de communication de données et carte destinée à être utilisée avec cet appareil**

(30) Priorité: 28.02.1992 CH 634/92
(71) Demandeur: SWATCH AG, CH-2500 Biel (CH)
(72) Inventeur: Ducret, Daniel, CH-3427 Utzendorf (CH); Schelling, Andreas, CH-4560 Nidau (CH)
(74) Mandataire: de Raemy, Jacques

(57) **Abrégé**

L'invention concerne un appareil de communication de données ainsi qu'une carte destinée à être utilisée avec cet appareil.

Cet appareil comprend des moyens de lecture (3) pour lire un certain nombre de codes de fonctions (16) ménagés sur une carte (15), chacun de ces codes de fonctions (16) étant ménagé en une position différente sur ladite carte (15), des moyens mémoire (12) pour le stockage de données à un ou plusieurs groupes d'adresses, chacun de ces groupes d'adresses comportant une ou plusieurs adresses (19), chacune de ces dites adresses correspondant à l'un des codes de fonctions (16), des moyens (4) d'affichage des données pour afficher des données stockées de l'un ou plusieurs des groupes d'adresses, cet appareil étant caractérisé en ce que la relation physique entre lesdits moyens de lecture (3) et ladite carte (15) est susceptible d'être modifiée pour permettre auxdits moyens de lecture (3) de lire séparément chacun desdits codes de fonctions (16).

Cet appareil est destiné par exemple à être incorporé à un appareil téléphonique ou à un appareil de transmission de télécopies.

## Description

La présente invention se rapporte de façon générale à un appareil de communication de données, et plus particulièrement à un appareil de communication de données destiné au stockage et à la transmission de données, afin de commander un appareil que l'on peut commander de façon électrique.

Cette invention se rapporte de plus à une carte destinée à être utilisée avec cet appareil de communication de données.

L'appareil de communication de données selon l'invention est approprié pour être utilisé avec un appareil de transmission de télécopies et/ou avec un appareil téléphonique, et cette invention sera par conséquent ci-après décrite en rapport avec cette application, donnée à titre d'exemple. On comprendra cependant que l'invention n'est pas limitée à cette application, mais peut-être appropriée pour être utilisée dans d'autres applications.

Les appareils de communication de données existant permettent le stockage et la transmission de données à une partie fonctionnelle d'un appareil de transmission de télécopies ou à un appareil téléphonique, et permettent ainsi le fonctionnement de ces machines et de ces appareils, et permettent aussi la communication entre d'autres machines et appareils similaires.

Les appareils de communication de données de ce type comportent généralement une zone de stockage d'informations dite zone mémoire pour stocker des numéros de téléphone et de télécopie et pour la transmission de ceux-ci à une unité de sélection de numéros afin d'appeler un numéro choisi. Généralement, cette zone mémoire fait partie intégrante de l'appareil de transmission de télécopies ou de l'appareil téléphonique et des numéros choisis peuvent être stockés en faisant des séries de codes sur un clavier. Pour composer un numéro stocké, on doit composer sur le clavier une série de codes correspondant au numéro sélectionné et le numéro stocké est automatiquement composé.

Afin de permettre uniquement à un nombre limité d'utilisateurs d'utiliser un tel système, il existe aussi des appareils de communication de données qui comportent une zone mémoire ménagée sur une carte formant interface entre l'utilisateur et l'appareil, dite carte d'interface utilisateur. Une telle zone mémoire est généralement réalisée par des moyens magnétiques ou par un circuit intégré, et est adaptée à stocker différentes données choisies par l'utilisateur. Quand une telle carte est insérée dans un appareil de transmission de télécopies ou dans un appareil téléphonique, les numéros sélectionnés peuvent être stockés et composés en faisant différentes séries de codes, de façon indiquée ci-dessus.

Pour connaître le contenu de ces zones mémoire qui contiennent des numéros choisis et d'autres codes fonctionnels, il est nécessaire de composer d'autres séries de codes par l'intermédiaire du clavier.

En utilisant l'un des deux appareils ci-dessus, il est difficile d'obtenir un contrôle global de tous les numéros et des toutes les fonctions disponibles. Le nombre de codes dont l'utilisateur a besoin pour cette opération peut rendre la manoeuvre compliquée et longue, et nécessite généralement de répondre à des séries de questions longues posées par l'appareil. De plus, la réalisation de cartes magnétiques appropriées et en particulier de cartes à circuit intégré, est coûteuse.

Ainsi, la présente invention a pour but de fournir un appareil de communication de données ainsi qu'une carte destinée à être utilisée avec cet appareil oui répondent aux problèmes des dispositifs de l'art antérieur et/ou tout au moins fournisse à l'utilisateur des possibilités de choix.

Un autre but de la présente invention est de fournir un appareil de communication de données capable de stocker et de transmettre des données de façon simple et efficace.

Un autre but de la présente invention est de fournir un appareil de communication de données destiné à être utilisé avec une carte d'interface utilisateur.

A cet effet, la présente invention a pour objet un appareil de communication de données comportant des moyens de lecture pour lire une pluralité de codes de fonctions situés sur une carte, où chaque code de fonction est disposé en une position différente sur la carte, des moyens formant mémoire pour le stockage de données à un ou plusieurs groupes d'adresses, et dans lequel chaque groupe peut comprendre au moins une adresse, chaque adresse correspondant a un code de fonction, et des moyens d'affichage de données pour afficher des données stockées à au moins un groupe d'adresses.

L'invention est caractérisée en ce que la relation physique des moyens de lecture et de la carte est apte à être modifiée afin de permettre ainsi aux moyens de lecture de lire de façon séparée chacun des codes de fonctions.

Selon un mode de réalisation de la présente invention, l'appareil de communication de données comporte des moyens de lecture pour détecter la présence ou l'absence de codes ménagés sur une carte.

On comprendra qu'un certain nombre de moyens peuvent être utilisés pour la disposition et la lecture de tels codes, ces codes pouvant comporter une série de chiffres binaires (digit). Les moyens de lecture peuvent comporter par conséquent des moyens pour détecter la présence ou l'absence de tels chiffres binaires. Par exemple, ces chiffres binaires peuvent comporter des zones de réflexion ou des zones d'absorption de la lumière. Les moyens de lecture peuvent comporter des capteurs pour détecter ces zones. De tels capteurs peuvent comporter une série de paires émetteur/récepteur.

Chaque code de fonction correspond à une adresse dans les moyens formant mémoire. On comprendra qu'il existe un certain nombre de moyens formant mémoire appropriés et que ceux-ci peuvent être réalisés en utilisant un système à microprocesseur, comportant des mémoires vives et mortes (R.A.M. et R.O.M.). Chaque code de fonction correspond à une adresse dans une mémoire appropriée dans laquelle peuvent être introduits des numéros de téléphone ou de télécopie qui y sont stockés, ainsi que des messages ou des commandes ou d'autres données similaires destinés à être affichés à l'utilisateur. Ces données peuvent être des données aptes à être stockées par un utilisateur, et/ou des données stockées de façon permanente à une adresse particulière. Les moyens d'affichage selon la présente invention sont aptes à afficher les données stockées. De nombreux moyens d'affichage appropriés sont disponibles sur le marché, tels que par exemple des dispositifs bien connus comme les affichages à cristaux liquides ou à diodes électroluminescentes. De tels moyens d'affichage peuvent fournir une confirmation visuelle des données contenues à une adresse et correspondant à un code de fonction particulier.

Afin que les codes de fonction qui sont chacun disposés en des positions différentes sur une carte puissent être lus par l'appareil de communication de données selon la présente invention, la relation physique de la carte et des moyens de lecture est apte à être modifiée.

Selon un mode de réalisation de la présente invention, les moyens de lecture sont intégrés à l'appareil de communication de données pour former un tout, tandis que la carte peut être déplacée par rapport aux moyens de lecture. Ainsi, la carte peut être positionnée de sorte qu'un code de fonction voulu puisse être lu par les moyens de lecture. De préférence, les données contenues à une adresse correspondant aux codes de fonctions ainsi lues, peuvent être visualisées et fournies à l'utilisateur par les moyens d'affichage de données.

Selon une autre caractéristique de la présente invention, la position relative de la carte et des moyens de lecture peut être modifiée en fonction d'une série de codes de fonctions. Des moyens d'affichage de données peuvent être prévus de sorte que chaque fonction soit lue, les données contenues à une adresse correspondant à chaque code de fonction étant affichées et fournies à l'utilisateur. Un compte-rendu visuel peut ainsi être réalisé de façon simple de sorte qu'un utilisateur puisse visualiser les fonctions et les données disponibles en déplaçant la carte par rapport aux moyens de lecture.

Selon encore une autre caractéristique de la présente invention, l'appareil de communication de données peut fournir de plus des moyens pour afficher des noms de fonction disposés sur une carte d'interface utilisateur, chaque nom de fonction étant disposé dans une position correspondant à chaque code de fonction. De cette manière, on peut fournir à un utilisateur une indication visuelle relative aux données stockées à une adresse correspondant à un code de fonction souhaité qui est lu. Un tel nom de fonction peut représenter, par exemple, le nom d'un correspondant à appeler, tandis que les données stockées et visualisées par les moyens d'affichage peuvent être le numéro de téléphone ou le numéro de télécopieur de ce correspondant.

Les moyens pour afficher les noms de fonction peuvent être n'importe quels moyens appropriés ménagés de telle sorte que les noms de fonction soient enregistrés sur une carte, mais de façon préférée peuvent être une fenêtre ménagée dans le corps de l'appareil de la présente invention. Par exemple, dès que la carte d'interface utilisateur est déplacée par rapport aux moyens de lecture, les noms de fonction inscrits sur la carte peuvent être affichés par la fenêtre. Un appareil de communication de données ayant ces caractéristiques ou d'autres caractéristiques peut être construit de façons différentes mais on a décrit de façon avantageuse ci-après une construction particulière qui a été testée de façon satisfaisante lors d'essais.

L'invention a aussi pour objet une carte destinée à être utilisée avec un appareil de communication de données tel que celui susmentionné, caractérisée en ce qu'elle comporte des codes de fonctions ayant une ou plusieurs composantes binaires, les moyens de lecture de l'appareil étant conformés pour détecter la présence ou l'absence de chacune de ces composantes.

Mais d'autres caractéristiques et avantages de l'invention apparaîtront mieux à la lecture de la description détaillée qui suit, prise en référence aux dessins annexés qui sont donnés à titre d'exemple, et dans lesquels:
- la figure 1 est un schéma bloc d'un appareil de communication de données selon la présente invention;
- la figure 2 représente un mode de réalisation d'une carte utilisateur destinée à être utilisée avec l'appareil de communication de données de la figure 1;
- la figure 3 représente le fonctionnement des moyens de lecture de l'appareil de communication de données de la figure 1;
- la figure 4 représente partiellement le boîtier d'un mode de réalisation de l'appareil de communication de données de la figure 1;
- la figure 5 est un organigramme d'un programme de sélection de numéros;
- la figure 6 est un organigramme d'un programme de stockage; et
- la figure 7 est un organigramme d'un programme de mise en route.

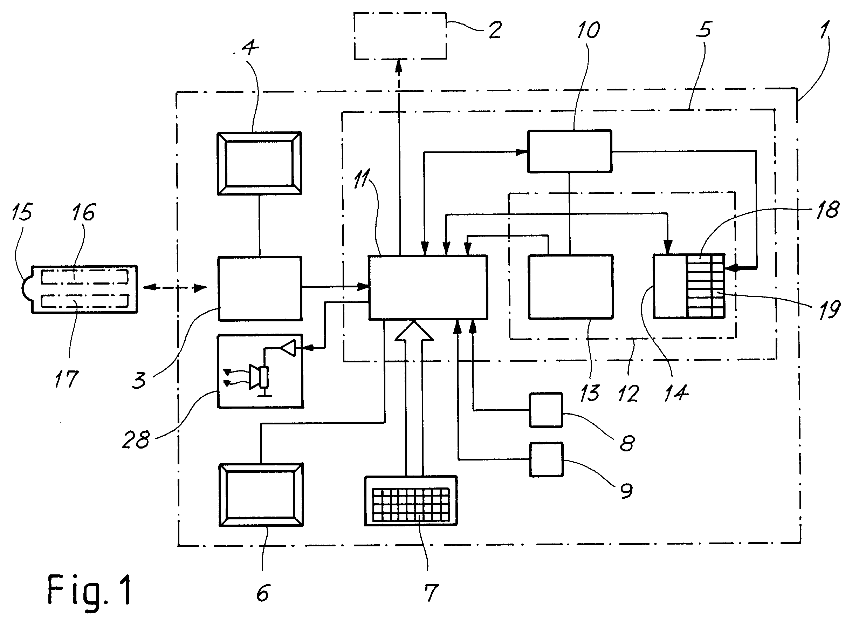

En se référant désormais à la figure 1, on décrira un appareil de communication de données représenté par la référence générale 1 qui est connecté à un dispositif fonctionnel 2, tel qu'une unité de sélection de numéros. On comprendra que la présente invention peut s'appliquer à d'autres dispositifs fonctionnels appropriés et que cette application ne doit pas être limitée aux appareils téléphoniques ou aux appareils de transmission de télécopies seuls.

L'appareil 1 de communication de données comporte des moyens de lecture 3, des moyens d'affichage 4 associés, ainsi que des moyens de quittance acoustique 28, une unité de commande 5, des moyens 6 d'affichage de données, un clavier 7, une touche de validation 8, et une touche d'annulation 9. L'unité de commande 5 comporte une unité de traitement central 10, une unité d'entrée/sortie 11 et des moyens 12 formant mémoire. Les moyens formant mémoire ou moyens mémoire 12 comportent une zone 13 de stockage de programme et une zone 14 de stockage de données utilisateur. Des bus de données, des bus de commande et des bus d'adresses sont aussi incorporés dans l'appareil de communication de données 1, mais ont été omis dans un but de clarté. Comme l'homme du métier le comprendra, divers composants et divers circuits peuvent être utilisés pour réaliser la fonction de l'unité de commande 5 en particulier, et de l'appareil 1 de communication de données en général.

Les moyens de lecture sont conformés pour lire une carte 15 d'interface utilisateur qui comporte, disposés sur celle-ci, des codes de fonctions 16 et des noms de fonctions 17. Comme on l'expliquera ci-après, la relation physique entre la carte 15 et les moyens de lecture 3 peut être modifiée si bien qu'ils peuvent être déplacés entre différentes positions de sorte qu'un code différent, parmi les codes de fonction 16, peut être lu par les moyens de lecture 3 dans chacune des différentes positons.

Chacun des codes de fonction 16 ainsi lu est transmis à l'unité de commande 5 par l'unité d'entré/sortie 11. Une zone 13 de stockage de programme et une zone 14 de stockage de données utilisateur (réalisée respectivement sous la forme de mémoires vives et de mémoires mortes, connues sous l'appellation britannique ROM et RAM) faisant partie des moyens mémoire 12, comportent des données 18 stockées à au moins un groupe d'adresses 19 (représenté de façon schématique uniquement dans la zone 14 de stockage des données utilisateur dans un but de clarté). Chacune des adresses 19 auxquelles les données 18 sont stockées correspondent à l'un des codes de fonctions 16.

En utilisation, la carte d'interface utilisateur 15 est introduite (ou sinon de façon équivalente est disposée par rapport aux moyens de lecture 3) dans l'appareil 1 de communication de données, et un code particulier parmi les codes de fonctions 16 est lu. Ce code de fonction 16 est ensuite utilisé comme adresse 19, et les données 18 stockées à l'adresse 19 sont affichées par les moyens d'affichage de données 6.

Dès que la relation physique entre la carte 15 et les moyens de lecture 3 est modifiée, un code différent parmi les codes de fonction 16 est lu, qui correspond à une nouvelle adresse 19. Les données contenues à la nouvelle adresse 19 sont ensuite affichées par les moyens d'affichage 6, de sorte qu'il est fourni à l'utilisateur de la carte 15 un compte-rendu ou quittance visuelle de la position relative de la carte 15. L'utilisateur peut de cette façon visualiser les données 18 contenues dans chaque adresse 19 correspondant à chacun des codes de fonction 16 sur la carte 15. Un code de fonction voulu parmi les codes de fonctions 16 peut rapidement et facilement être sélectionné par un utilisateur. Quand les données correspondantes 18 sont affichées, ces données peuvent être transmises au dispositif fonctionnel 2 pour l'exécution d'une opération (par exemple la sélection d'un numéro de téléphone) par l'actionnement de la touche de validation 8. De façon similaire, la transmission de ces données au dispositif fonctionnel 2 peut être stoppée par l'actionnement d'une touche d'annulation 9 ou d'autres moyens appropriés, tels que par la remise en place d'un combiné (non représenté) associé à l'appareil 1 de communication de données.

La touche de validation 8 et la touche d'annulation 9 peuvent de plus être utilisées en combinaison avec le clavier 7 pour modifier les données affichées et stockées, pour stocker initialement les données et pour répondre au système rapidement comme on l'expliquera ci-après. La commande de ces fonctions peut être réalisée par les instructions d'un programme stocké dans une zone 13 de stockage de programme en combinaison avec l'unité de traitement centrale 10.

De plus, les moyens 4 d'affichage de fonctions peuvent être ménagés pour afficher de façon séparée l'un des noms parmi les noms de fonction 17 qui correspond à l'un des codes de fonctions parmi les codes de fonctions 16, en fournissant ainsi, à un utilisateur, un compte-rendu ou quittance visuelle du code de fonction qui est en train d'être lu et affiché par les moyens 6 d'affichage de données.

Un compte-rendu ou quittance acoustique peut aussi être fourni par des moyens 28 de compte-rendu ou de quittance acoustique de sorte qu'un signal audible soit transmis dès que chacun des codes de fonctions 16 est lu, ou à chaque fois que la relation physique entre la carte 15 et les moyens de lecture 3 est modifiée pour déplacer un code de fonctions à un code de fonctions adjacent parmi les codes de fonctions 16.

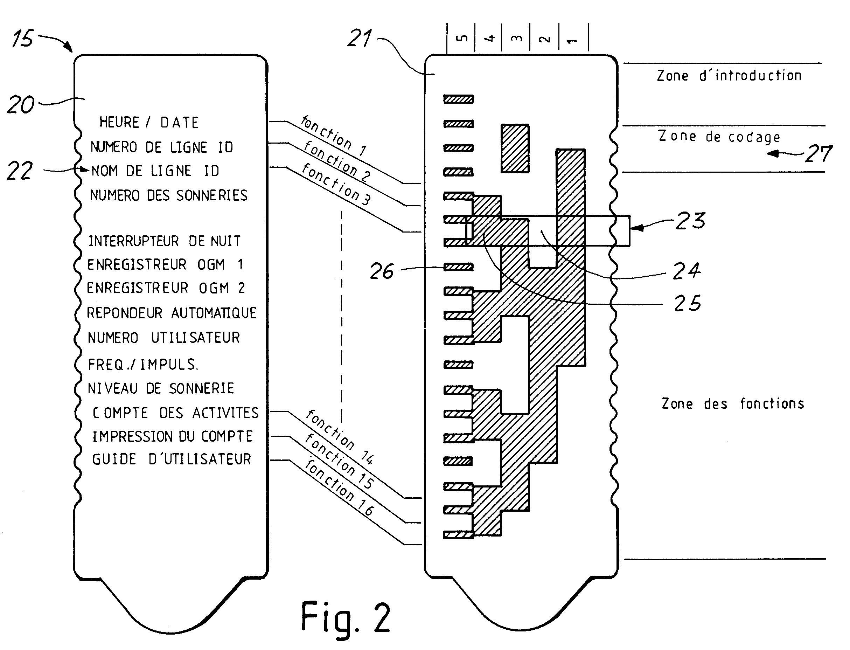

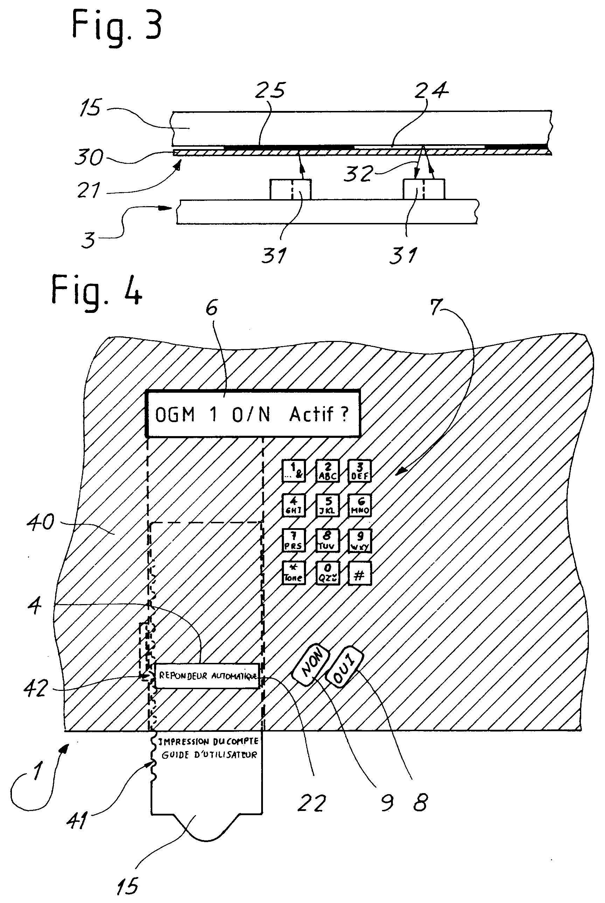

En se référant désormais à la figure 2, il est représenté une carte 15 d'interface utilisateur qui comporte une surface supérieure 20 et une surface inférieure 21. La surface supérieure comporte des noms de fonction 22 qui sont inscrits sur celle-ci, tandis que la surface 21 comporte des codes de fonctions 23 qui sont ménagés sur celle-ci. On comprendra que la relation physique entre les noms de fonctions 22 et les codes de fonctions 23 et la façon de les réaliser et leur emplacement ne représente qu'un mode de réalisation d'une carte destinée à être utilisée dans l'appareil de communication de données selon la présente invention. On peut souhaiter, par exemple, de disposer à la fois des noms de fonctions 22 et les codes de fonctions 23 sur un même côté de la carte 20 ou de réaliser une carte 15 ayant des noms de fonctions stockés de façon magnétique ou de façon optique sur celle-ci. Ces variantes ainsi que d'autres variantes peuvent être facilement comprises par l'homme du métier. Dans le mode de réalisation représenté à la figure 2, les codes de fonctions 23 comportent un certain nombre de zones 24 réfléchissant la lumière et des zones 25 absorbant la lumière. Comme on le voit mieux sur la figure 3, les zones 24 de réflexion et les zones 25 d'absorption peuvent être ménagées sur la surface inférieure 21 de la carte 15 d'interface utilisateur. Un revêtement protecteur 30 peut être appliqué sur la zone 24 de réflexion et sur la zone 25 d'absorption. Le revêtement protecteur 30 peut de même être opaque et servir à cacher l'emplacement des zones 24 et 25 sur la carte 15 afin d'améliorer la sécurité de la carte 15 et de masquer la nature de son interaction avec les moyens mémoire 12.

Les moyens de lecture 3 peuvent comporter un certain nombre de paires 31 d'émetteur/récepteur infrarouge. La détection de la lumière réfléchie indiquée en 32 représente la présence de zones de réflexion de la lumière, tandis que l'absence de cette lumière réfléchie indique la présence d'une zone d'absorption lumineuse. Beaucoup d'autres systèmes pour la détection de telles zones peuvent être utilisés comme le comprendra l'homme du métier.

Le signal numérique correspondant aux séries de zones ainsi détectées (comprenant un des codes de fonctions 23) peut ainsi être utilisé pour identifier une adresse 19 dans les moyens de mémoire 14 et des données 18 stockées dans celles-ci et affichées par les moyens d'affichage de données 6.

Comme le montre la figure 2, en plus des codes de fonctions 23, la carte 15 d'interface utilisateur peut être pourvue de zones 26 de détection de position, pour fournir une indication électrique relative à une modification de la relation physique entre la carte 15 et les moyens de lecture 3. Les zones 26 de détection de position sont interposées entre les codes adjacents des codes de fonctions 23 de sorte que le mouvement longitudinal de la carte 15 vers une position permet à un nouveau code parmi les codes de fonctions 23 d'être lu, permettant à l'une des zones de détection de position parmi les zones 26 d'être lue par les moyens de lecture 3, lors de ce mouvement. L'unité de traitement centrale 10 va permettre aux moyens d'affichage de données 6 d'afficher les données 18 disposées à la nouvelle adresse 19 et correspondant aux nouveaux codes des codes de fonctions 23. Les zones 26 de détection de position peuvent de même être réalisées par des zones de détection ou d'absorption de lumière. Une zone initiale parmi les zones 26 de détection de position peut être utilisée pour fournir à l'unité de traitement centrale 10 une indication comme quoi la carte 15 a été insérée dans l'appareil de communication de données 1 et que les dispositifs associés, tels que les moyens d'affichage 6 peuvent être activés.

Un ou plus des codes de fonctions peuvent de même être utilisés pour identifier la carte qui a été introduite dans l'appareil de communication de données 1 et pour savoir à quel groupe d'adresses dans les moyens mémoire 12 l'on doit accéder. Les mêmes codes de fonctions 23 par exemple, peuvent correspondre à divers groupes d'adresses et des codes particuliers parmi les codes de fonctions 23 peuvent être utilisés pour déterminer auxquels parmi ces groupes d'adresses, on doit accéder. Des caractères qui doivent être affichés à l'utilisateur sous la forme d'instructions par les moyens d'affichage de données 6 peuvent être stockés dans un certain nombre de langues, et des instructions dans une certaine langue peuvent être choisies en fonction de l'introduction d'une certaine carte 15. Comme on le voit sur la figure 4, l'appareil de communication de données 1 comporte un boîtier 40 qui comprend un clavier 7, une touche de validation 8 et une touche d'annulation 9, et des moyens d'affichage de données 6. Les moyens 4 d'affichage de fonctions sont ménagés sous la forme d'une fenêtre réalisée dans le boîtier 40, fournissant un accès visuel au nom des fonctions inscrites sur la carte 15 d'interface utilisateur . D'autres noms de fonctions 22 sont cachés de la vue par le boîtier 40 de sorte qu'un seul nom de fonction 22 est affiché à la fois. La carte 15 est de même pourvue d'une série d'encoches 41 pour recevoir une saillie correspondante 42 associée aux moyens de lecture 3 de l'appareil de communication de données 1. La saillie 42 peut être sollicitée élastiquement vers les encoches 41 de la carte 15. Les encoches 41 et la saillie 42 qui fournissent une indication mécanique de la relation physique entre la carte 15 et les moyens de lecture 3 servent à retenir la carte 15 et servent à maintenir la carte 15 et les moyens de lecture 3, dans une relation physique telle que l'un des codes de fonctions 23 puissent être lu. Comme le comprendra l'homme du métier, d'autres moyens permettant de fournir un maintien mécanique ou un compte-rendu peuvent être utilisés. Par exemple, ainsi en combinaison ou à la place de la saillie 42, une série de saillies 42 peuvent coopérer avec un mécanisme de commutation. Quand la carte 15 est déplacée par rapport au mécanisme de commutation, chacune des saillies 42 peut venir contre le mécanisme de commutation et ainsi permettre le fonctionnement de ce dernier. Le fonctionnement de ce mécanisme de commutation peut être utilisé pour fournir un compte-rendu ou quittance acoustique à l'utilisateur par l'intermédiaire de moyens 28 de contrôle acoustique.

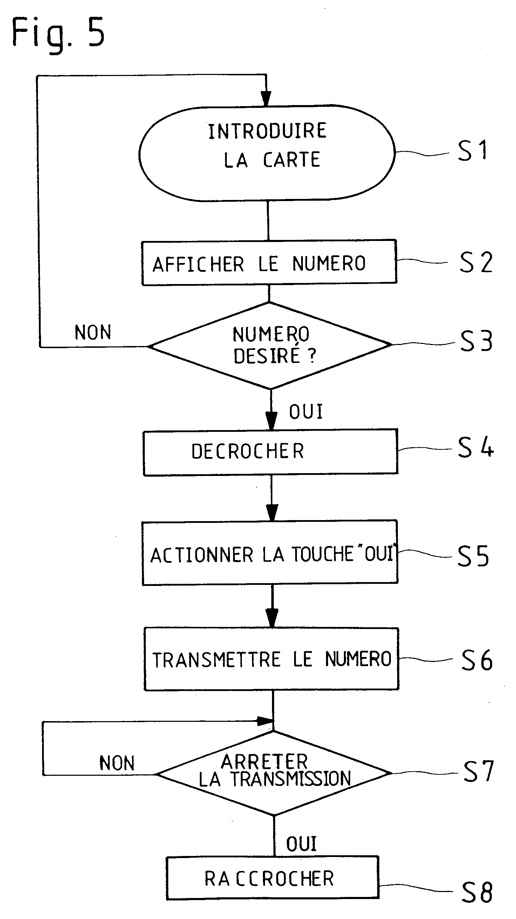

Un tel agencement tel que précédemment décrit permet à l'appareil de communication de données 1 d'être utilisé de façon simple, en évitant des séquences de codes complexes. En se référant désormais à la figure 5, on décrira ci-après un organigramme du fonctionnement de l'appareil de communication de données 1 lors de l'envoi de données stockées vers un dispositif fonctionnel 2 (par exemple lors de l'envoi d'un numéro de télécopie ou de téléphone stocké vers une unité de sélection de numéros).

Dans l'étape S1, la carte 15 est introduite dans l'appareil de communication de données de sorte que les codes de fonctions 23 peuvent être lus par les moyens de lecture 3. Quand la relation physique entre la carte 15 et les moyens de lecture 3 change de position, elle permet ainsi à différents codes parmi les codes de fonctions 23 d'être lus, les données stockées à l'adresse correspondant à chacun des codes de fonctions par les moyens d'affichages de données 6 comme représenté S2.

A l'étape S3, on évalue si les données affichées à l'étape S2 sont correctes. Dans l'affirmative, l'utilisateur de la carte a uniquement besoin de décrocher le combiné du système téléphonique dans l'étape S4 et d'actionner le bouton de validation 8 comportant l'inscription "OUI" comme représenté dans l'étape S5 pour envoyer dans l'étape S6 au dispositif fonctionnel 2 les données affichées.

A l'étape S7, on décide si la transmission des données affichées doit être poursuivie, dans la négative, le combiné est repositionné dans l'étape S8 et la transmission est stoppée. Dans l'étape S2, on comprendra que l'un des noms parmi les noms de fonctions 22 correspondant aux données affichées à chaque position peut être visualisé par l'utilisateur de la carte. Une fonction telle que la sélection d'un numéro de téléphone stocké peut par conséquent être tout simplement effectuée en déplaçant la carte à une position voulue et en actionnant le bouton de validation, ce qui évite ainsi la nécessité d'utiliser des séries compliquées de codes ou de se souvenir à quelle adresse est stockée des données qui correspondent à certain codes préprogrammés.

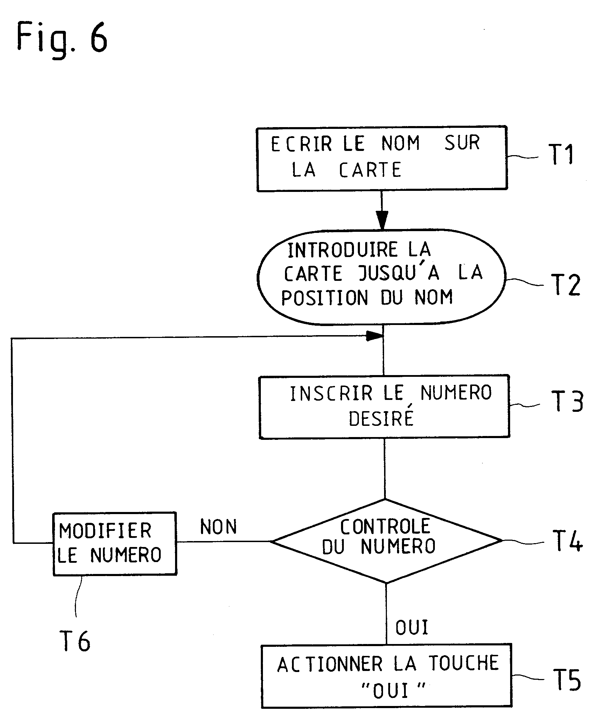

La figure 6 représente un organigramme du fonctionnement de l'appareil de communication de données 1 lors du stockage de données dans les moyens mémoire 12. Dans l'étape T1, un nom particulier parmi les noms de fonctions 22 est inscrit sur la surface supérieure 22 de la carte 15. Dans l'étape T2, la carte est positionnée jusqu'à ce que le nom de fonction ainsi transcrit soit visualisé sur les moyens d'affichage de fonction 4. Dans l'étape T3 les données sont entrées par l'intermédiaire du clavier 7 et sont stockées à l'adresse correspondant au code de fonction positionné pour être lu par les moyens de lecture 3. A l'étape 4, on décide si le numéro stocké est acceptable ou non et dans l'affirmative la touche de validation "OUI" est actionnée. Dans la négative, le numéro est modifié à l'étape T6.

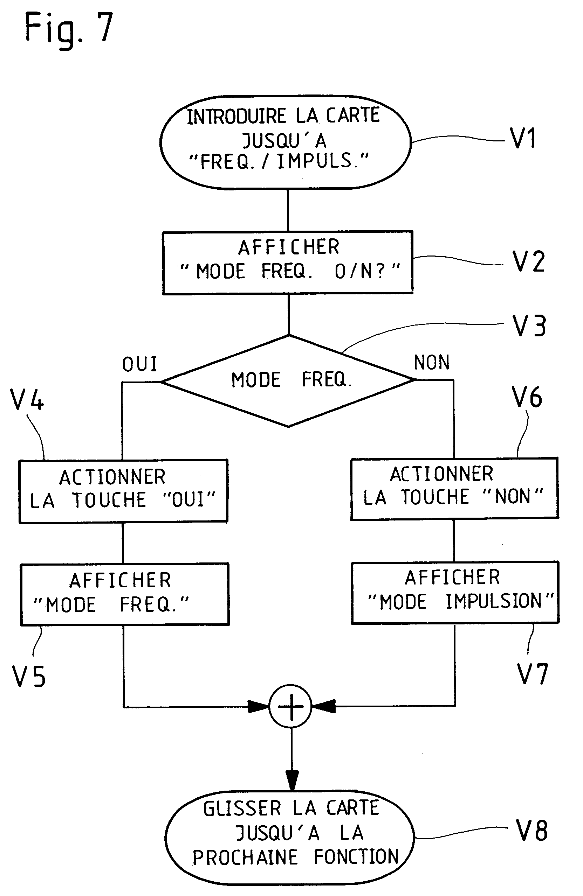

La figure 7 représente un organigramme du fonctionnement de l'appareil de communication de données 1, dans lequel certains systèmes préprogrammés ou des caractéristiques de mis en route peuvent être revues et modifiées. Dans l'étape V1, la carte 15 qui comporte les codes de fonctions 23 ménagés sur celle-ci, correspondant à ces caractéristiques de mise en route est introduite dans l'appareil de communication de données 1. Par exemple, la carte peut être positionnée de sorte qu'une sélection des numéros par le mode de sélection par impulsion ou par le mode de sélection par fréquence soit mis en route. Si on souhaite, à l'étape V3, mettre le système téléphonique dans le mode fréquence de sélection des numéros ("tone" selon l'appellation britannique) la touche 8 "OUI" est actionnée à l'étape V4, et un message d'affichage confirmant cette mise en place est représenté à l'étape V5. Si on souhaite à l'étape V3 mettre en place le système téléphonique sur le mode impulsion de sélection de numéros ("pulse" selon l'appellation britannique), la touche 9 "NON" est actionnée à l'étape V6 et de nouveau un message de visualisation confirmant cette mise en place est représenté à l'étape V7. Une autre fonction peut être mise en place à l'étape V8 en faisant coulisser la carte vers une nouvelle position. De même on remarquera qu'on a éviter des codes complexes.

## Revendications

1. Appareil de communication de données comprenant des moyens de lecture (3) pour lire un certain nombre de codes de fonctions (16) ménagés sur une carte (15), chacun de ces codes de fonctions (16) étant ménagé en une position différente sur ladite carte (15), des moyens mémoire (12) pour le stockage de données à un ou plusieurs groupes d'adresses, chacun de ces groupes d'adresses comportant une ou plusieurs adresses (19), chacune de ces dites adresses correspondant à l'un des codes de fonctions (16), des moyens (4) d'affichage des données pour afficher des données stockées de l'un ou plusieurs des groupes d'adresses, caractérisé en ce que la relation physique entre lesdits moyens de lecture (3) et ladite carte (15) est susceptible d'être modifiée pour permettre auxdits moyens de lecture (3) de lire séparément chacun desdits codes de fonctions (16).

2. Appareil selon la revendication 1, caractérisé en ce que lesdits moyens (4) d'affichage de données sont conformés pour afficher des données (18) stockées à l'une des adresses correspondantes (19) tandis que la relation physique entre lesdits moyens de lecture (3) et ladite carte (15) est telle qu'elle permet la lecture (19) d'un code de fonction (16) correspondant à cette adresse.

3. Appareil selon la revendication 1 ou 2, caractérisé en ce que ladite carte (15) comporte un accès physique permettant le positionnement manuel de cette carte (15) par rapport auxdits moyens de lecture (3).

4. Appareil selon l'une des revendications 1 à 3, caractérisé en ce que les moyens de lecture (3) sont conformés pour s'engager librement par rapport à ladite carte dans une ou plusieurs positions, ladite relation physique entre les moyens de lecture (3) et ladite carte (15) permettant la lecture de l'un des codes de fonctions (16) à une ou plusieurs positions.

5. Appareil selon l'une quelconque des revendications précédentes, caractérisé en ce que les moyens de lecture (3) sont pourvus d'une ou plusieurs saillies (41) pour l'engagement élastique non permanent libre entre les encoches (42) correspondantes ménagées le long d'un bord de ladite carte (15).

6. Appareil selon l'une quelconque des revendications précédentes, et du type comportant de plus des moyens d'affichage (6) de fonctions pour afficher de façon séparée chacune d'un certain nombre de noms de fonctions ménagées sur ladite carte, caractérisé en ce que chacun desdits noms de fonction (17) est combiné à l'un des codes de fonctions (16) et est ménagé dans une position correspondant auxdits codes de fonctions associés (16).

7. Appareil selon la revendication 6, caractérisé en ce que chacun desdits noms de fonctions (17) est inscrit sur une surface de ladite carte (15).

8. Appareil selon la revendication 7, caractérisé en ce que lesdits moyens (6) d'affichage de fonctions fournissent un accès visuel pour afficher séparément chacun desdits noms de fonction inscrits (17).

9. Appareil selon l'une quelconque des revendications précédentes, et du type comportant de plus des moyens d'accès de données pour permettre l'accès auxdites données stockées à l'un ou plusieurs desdits groupes d'adresses, caractérisé en ce qu'un ou plusieurs desdits codes de fonctions (17) comporte un code d'identification (27) qui permet l'accès à un ou plusieurs groupes d'adresses.

10. Appareil selon l'une quelconque des revendications précédentes, et du type comportant de plus des moyens de détection pour détecter la présence de ladite carte par lesdits moyens de lecture (3), caractérisé en ce qu'un ou plusieurs desdits codes de fonctions comporte un code d'introduction de sorte que ledit code d'introduction soit lu par lesdits moyens de lecture (3) pour permettre ainsi le fonctionnement dudit appareil de communication de données.

11. Appareil selon l'une quelconque des revendications précédentes, dans lequel ladite relation physique desdits moyens de lecture et de ladite carte est telle qu'à une première et une seconde position un premier et un second code sont respectivement lus, et dans lequel lesdits moyens de lecture sont adaptés à lire un certain nombre de marques de position ménagées sur ladite carte, caractérisé en ce que chacune desdites marques de position (26) est disposée en une position intermédiaire à ceux des codes de fonction (16) qui sont adjacents.

12. Appareil selon l'une quelconque des revendications précédentes, caractérisé en ce qu'il comporte des moyens de validation (8) pour envoyer des données (18) affichées par lesdits moyens (4) d'affichage de données destinées à être envoyées à un dispositif externe.

13. Appareil selon la revendication 12, caractérisé en ce qu'il comporte en outre des moyens d'annulation (9) pour annuler ladite transmission des données.

14. Carte destinée à être utilisée dans un appareil de communication de données selon l'une des revendications précédentes, caractérisée en ce qu'elle comporte des codes de fonction (16) ayant une ou plusieurs composantes binaires (24, 25), lesdits moyens de lecture (3) étant conformés pour détecter la présence ou l'absence de chacune de ces composantes binaires.

15. Carte selon la revendication 14, caractérisée en ce que chacune desdites composantes binaires (24, 25) comporte une zone de réflexion ou d'absorption de la lumière.

16. Carte selon la revendication 14 ou 15, caractérisée en ce qu'elle est conformée pour être engagée de façon élastique non permanente par rapport auxdits moyens de lecture (3) en une ou plusieurs positions permettant la lecture d'un desdits codes de fonction (16).

17. Carte selon l'une quelconque des revendications 14 à 16, caractérisée en ce qu'elle est pourvue le long d'un de ses côtés d'un certain nombre d'encoches (41) pour l'engagement par encliquetage avec une ou plusieurs saillies correspondantes (42) prévues dans lesdits moyens de lecture (3).

18. Carte selon l'une des revendications 14 à 17, caractérisée en ce qu'elle comporte des marques de position (26) comportant une composante binaire, lesdits moyens de lecture (3) étant conformés pour détecter la présence ou l'absence de ces marques de positions (26).

19. Carte selon la revendication 18 caractérisée en ce chacune desdites marques de positions (26) comporte une zone d'absorption ou de réflexion de la lumière.
